# EUROPEAN PATENT APPLICATION

(11) **EP 3 730 563 A1**
(43) Date of publication of application: **28.10.2020**
(21) Application number: 19170912.0
(22) Date of filing: 24.04.2019
(51) Int. Cl.: C09J 5/02

(54) **METHOD FOR PREPARING A BONDED ARTICLE BY CONDUCTING SINGLE-SIDED GLUING**

(71) Applicant: Covestro Deutschland AG, 51373 Leverkusen (DE)
(72) Inventor: The designation of the inventor has not yet been filed
(74) Representative: Levpat

(57) **Abstract**

This invention relates to a method for preparing a bonded article by conducting single-sided gluing, the bonded article prepared by said method, and the use of the bonded article in the production of footwear. The method comprises the steps of: a. applying a cleaning agent to at least one surface of a first substrate, and drying the surface of the first substrate to which the cleaning agent is applied; b. applying an adhesive to at least one surface of a second substrate, and drying the surface of the second substrate to which the adhesive is applied; and c. contacting the surface of the first substrate treated in step a with the surface of the second substrate treated in step b to obtain the bonded article; wherein the cleaning agent comprises a polar organic solvent and a polyisocyanate; the polar organic solvent has a boiling point of no more than 135 °C and is not isocyanate-reactive; wherein the polyisocyanate has an isocyanate group weight of from 0.005 wt% to 6 wt%, based on the weight of the cleaning agent.

## Description

### Technical field

This invention relates to a method for preparing a bonded article by conducting single-sided gluing, the bonded article prepared by said method, and the use of the bonded article in the production of footwear.

### Background

The traditional process of bonding shoe materials in the footwear industry is the double-sided gluing process, that is, applying adhesives to both the shoe sole and upper or to both the shoe midsole and outsole. It is often necessary to clean and prime the shoe midsole, outsole and upper before applying adhesives thereto. For example, CN 1235966 C discloses a laminate comprising a foamed product layer and a polyolefin layer, the bonding of which is carried out by using the double-sided gluing process. However, it is desired to find a simplified shoemaking process in the footwear industry, because the footwear industry is facing the problems of high labor costs, complicated gluing processes, and low production efficiency.

The single-sided gluing process reduces the gluing step, saves labor force, improves production efficiency, and also prevents adhesives from contaminating the shoe upper. Therefore, it is highly desired in the footwear industry. The difficulty with the single-sided gluing process is the need to find suitable substrate treatment agents and adhesives.

Hot melt adhesives can be applied in the single-sided gluing process, but not widely used in the footwear industry due to their disadvantages such as poor initial performance and high equipment costs. The industry has also attempted to use an aqueous polyurethane dispersion adhesive for the single-sided gluing process.

CN 1098154 C discloses a method for producing a laminate by injection molding, comprising the steps of applying to a substrate a primer comprising an organic solvent and an ethylene or propylene polymer on which an unsaturated carboxylic acid or its anhydride, ester, amide, imide or metal salt is grafted, and injection molding the ethylene or propylene polymer onto the substrate to which the primer is applied. This method is not suitable for an application process.

CN 107802056 A discloses a method for making shoes by conducting single-sided gluing of a powdered adhesive. The powdered adhesive used in this method comprises a common polyurethane resin and a common polyamide resin. However, the mechanical properties of the shoe materials produced by conducting single-sided gluing of the powdered adhesive are much worse than those of the shoe materials produced by conducting double-sided gluing.

Therefore, it is desirable in the industry to develop a single-sided gluing process leading to a product having good bond strength, heat resistance and hydrolysis resistance.

### Summary of the invention

It is an object of the present invention to provide a method for preparing a bonded article by conducting single-sided gluing, the bonded article prepared by said method, and the use of the bonded article in the production of footwear.

The method for preparing a bonded article by conducting single-sided gluing according to the present invention comprises the steps of:
a. applying a cleaning agent to at least one surface of a first substrate, and drying the surface of the first substrate to which the cleaning agent is applied;
b. applying an adhesive to at least one surface of a second substrate, and drying the surface of the second substrate to which the adhesive is applied; and
c. contacting the surface of the first substrate treated in step a with the surface of the second substrate treated in step b to obtain the bonded article;
wherein the cleaning agent comprises a polar organic solvent and a polyisocyanate; the polar organic solvent has a boiling point of no more than 135 °C and is not isocyanate-reactive; the polyisocyanate has a general formula R(NCO)ₙ, wherein R is one or more of the following: an aliphatic hydrocarbon group having 2 to 18 carbon atoms, an aromatic hydrocarbon group having 6 to 15 carbon atoms, and an araliphatic hydrocarbon group having 8 to 15 carbon atoms, and n is not less than 2; wherein the polyisocyanate has an isocyanate group weight of from 0.005 wt% to 6 wt%, based on the weight of the cleaning agent.

According to one aspect of the invention, there is provided a bonded article prepared by the method according to the present invention.

According to another aspect of the invention, there is provided the use of the bonded article according to the present invention in the production of footwear.

The bonded article obtained by conducting single-sided gluing process according to the present invention has good initial bond strength, final bond strength, heat resistance and hydrolysis resistance.

### Detailed description

The present invention provides a method for preparing a bonded article by conducting single-sided gluing, comprising the steps of: a. applying a cleaning agent to at least one surface of a first substrate, and drying the surface of the first substrate to which the cleaning agent is applied; b. applying an adhesive to at least one surface of a second substrate, and drying the surface of the second substrate to which the adhesive is applied; and c. contacting the surface of the first substrate treated in step a with the surface of the second substrate treated in step b to obtain the bonded article; wherein the polar organic solvent has a boiling point of no more than 135 °C and is not isocyanate-reactive; the polyisocyanate has a general formula R(NCO)ₙ, wherein R is one or more of the following: an aliphatic hydrocarbon group having 2 to 18 carbon atoms, an aromatic hydrocarbon group having 6 to 15 carbon atoms, and an araliphatic hydrocarbon group having 8 to 15 carbon atoms, and n is not less than 2; wherein the polyisocyanate has an isocyanate group weight of from 0.005 wt% to 6 wt%, based on the weight of the cleaning agent. The present invention also provides the bonded article prepared by said method, and the use of the bonded article in the production of footwear.

The expressions "first" and "second" in the first substrate and the second substrate of the present invention are merely intended for convenience of describing two substrates, and not used to distinguish the order of the substrates.

The first substrate and the second substrate of the present invention may be the same or different.

The step a and the step b may be performed at the same time, or the step a may be performed prior to the step b, or the step b may be performed prior to the step a.

### Cleaning agent

Preferably, the polyisocyanate has an isocyanate group weight of from 0.007 wt% to 5.6 wt%, further preferably from 0.01 wt% to 4.5 wt%, more preferably from 0.01 wt% to 0.5 wt%, still more preferably from 0.02 wt% to 0.2 wt%, more preferably from 0.02 wt% to 0.085 wt%, and most preferably from 0.04 wt% to 0.085 wt%, based on the weight of the cleaning agent.

The polar organic solvent of the present invention refers to a solvent the molecule of which is a polar molecule.

The polar organic solvent preferably has a boiling point of from 35 °C to 135 °C.

The polar organic solvent is preferably one or more of acetone, methyl ethyl ketone, ethyl acetate or butyl acetate, a mixture of butyl acetate and cyclohexane and methyl ethyl ketone, a mixture of methyl ethyl ketone and propylene glycol diacetate, or a mixture of butyl acetate and methyl ethyl ketone and propylene glycol methyl ether acetate.

The polar solvent is further preferably a mixture of methyl ethyl ketone and ethyl acetate, a mixture of methyl ethyl ketone and butyl acetate, a mixture of methyl ethyl ketone and propylene glycol diacetate, a mixture of acetone and butyl acetate, a mixture of ethyl acetate and butyl acetate, a mixture of ethyl acetate and butyl acetate and methyl ethyl ketone, a mixture of butyl acetate and cyclohexane and methyl ethyl ketone, a mixture of butyl acetate and methyl ethyl ketone and propylene glycol methyl ether acetate, methyl ethyl ketone or butyl acetate.

The polar solvent is most preferably methyl ethyl ketone.

In the general formula R(NCO)ₙ, n is preferably from 2.5 to 5.5, most preferably from 2.5 to 4.

The polyisocyanate is preferably one or more of the following: an aliphatic polyisocyanate derivative having an allophanate, biuret, uretdione, isocyanurate and/or iminooxadiazinedione group, an aromatic polyisocyanate derivative having an allophanate, biuret, uretdione, isocyanurate and/or iminooxadiazinedione group, and a cycloaliphatic polyisocyanate derivative having an allophanate, biuret, uretdione, isocyanurate and/or iminooxadiazinedione group; further preferably one or more of the following: an aliphatic polyisocyanate derivative having an allophanate and/or isocyanurate group, a cycloaliphatic polyisocyanate derivative having an allophanate and/or isocyanurate group, and an aromatic polyisocyanate derivative having an allophanate and/or isocyanurate group; more preferably one or more of the following: toluene diisocyanate trimer, the prepolymer of toluene diisocyanate and diphenylmethane diisocyanate, hexamethylene diisocyanate trimer, isophorone diisocyanate trimer, the prepolymer of diphenylmethane diisocyanate and tris-(4-isocyanatophenyl) thiophosphate; most preferably one or more of the following: the prepolymer of toluene diisocyanate and diphenylmethane diisocyanate, and toluene diisocyanate trimer.

The polyisocyanate preferably has a solid content of from 25 wt% to 100 wt%, based on the total amount of the polyisocyanate.

The polyisocyanate preferably has a viscosity of from 3 mPa·s to 5500 mPa·s, most preferably from 3 mPa·s to 2200 mPa·s, determined according to DIN EN ISO 3219:1994-10 at 23 °C and a shear rate of 10 s⁻¹.

The polyisocyanate preferably has an NCO group content of from 4.5 wt% to 24 wt%, most preferably from 4.5 wt% to 14 wt%, determined according to DIN-EN ISO 11909:2007-05 by volume, the measured data including both free and potentially free NCO contents.

The polyisocyanate preferably has an isocyanate functionality of from 2 to 5.

The polyisocyanate preferably has a number average molecular weight of from 380 g/mol to 1560 g/mol, determined by gel permeation chromatography according to DIN 55672-1:2016-03 with tetrahydrofuran as a mobile phase and a control polystyrene standard at 23 °C.

The cleaning agent comprises a polar organic solvent and a polyisocyanate, wherein the polar organic solvent is preferably a mixture of methyl ethyl ketone and ethyl acetate, a mixture of methyl ethyl ketone and butyl acetate, a mixture of methyl ethyl ketone and propylene glycol diacetate, a mixture of acetone and butyl acetate, a mixture of ethyl acetate and butyl acetate, a mixture of ethyl acetate and butyl acetate and methyl ethyl ketone, a mixture of butyl acetate and cyclohexane and methyl ethyl ketone, a mixture of butyl acetate and methyl ethyl ketone and propylene glycol methyl ether acetate, methyl ethyl ketone or butyl acetate; the polyisocyanate is preferably one or more of the following: toluene diisocyanate trimer, the prepolymer of toluene diisocyanate and diphenylmethane diisocyanate, hexamethylene diisocyanate trimer, isophorone diisocyanate trimer, the prepolymer of diphenylmethane diisocyanate and tris-(4-isocyanatophenyl) thiophosphate; wherein the polyisocyanate has an isocyanate group weight of from 0.005 wt% to 6 wt%, based on the weight of the cleaning agent..

Most preferably, the cleaning agent comprises methyl ethyl ketone and a polyisocyanate having an isocyanate functionality of from 2.5 to 4, wherein the polyisocyanate is one or more of the following: the prepolymer of toluene diisocyanate and diphenylmethane diisocyanate, and toluene diisocyanate trimer, wherein the polyisocyanate has an isocyanate group weight of from 0.04 wt% to 0.085 wt%, based on the weight of the cleaning agent.

The cleaning agent does not contain an adhesive.

The polar solvent and the polyisocyanate of the present invention may be stored separately or may be premixed and present in the form of a polyisocyanate solution.

### First substrate

The first substrate is those commonly used in the art, particularly materials that can be used in the shoe midsole, shoe upper, and toe cap. The first substrate is preferably one or more of the following: a polyurethane-based material and a polyvinyl chloride-based material, most preferably a polyurethane-based synthetic leather.

### Adhesive

The adhesive may be a one-component adhesive, a two-component adhesive or a three-component adhesive commonly used in the art.

The adhesive is preferably one or more of the following: a solvent-type polyurethane, a solvent-type polychloroprene rubber, an aqueous polyurethane dispersion, an aqueous polychloroprene rubber, and a hot melt adhesive-type polyurethane; further preferably an aqueous polyurethane dispersion, most preferably a two-component aqueous polyurethane dispersion.

The two-component aqueous polyurethane dispersion preferably comprises an aqueous polyurethane dispersion and an isocyanate curing agent.

### Second substrate

The second substrate is those commonly used in the art, particularly materials that can be used in the shoe midsole, shoe upper, and toe cap. The second substrate is preferably one or more of the following: a polyurethane-based material and a polyvinyl chloride-based material, most preferably a polyurethane-based synthetic leather.

### Pretreatment of the second substrate

Preferably, prior to applying the adhesive, the second substrate is subject to a pretreatment comprising the steps of:
i. sanding or cleaning the second substrate; and
ii. applying a primer to the second substrate treated in step i.

The sanding is used to increase the surface roughness of the substrate. The sanding can be mechanical sanding.

The cleaning is the use of a solvent well known to those skilled in the art to remove oil or dust from the surface of the substrate.

The primer may be those commonly used in the art including, but not limited to, a TCI coating, a UV coating, a solvent-type polyurethane coating or an aqueous polyurethane dispersion coating.

### Applying

The applying may be applying the cleaning agent or adhesive to the entire surface of the substrate or to only one or more portions of the surface of the substrate.

The applying may be brushing, dipping, spraying, roller coating, blade coating, flow coating, pouring, printing or transfer printing; preferably brushing, dipping or spraying.

### Drying

The drying of the surface of the first substrate to which the cleaning agent is applied and the drying of the surface of the second substrate to which the adhesive is applied may refer to drying only the surface of the substrate, and may also refer to drying the partial or entire substrate including the surface of the substrate to which the cleaning agent or adhesive is applied.

The drying can remove a volatile component. The volatile component can be water.

The drying is preferably one or more of the following: infrared heat radiation, near-infrared heat radiation, microwaves, and the use of a convection oven or a spray dryer under an elevated temperature.

The drying can be performed at a temperature as high as possible, but not above the temperature limit beyond which the substrate deforms in an uncontrolled manner or encounters other damage.

### Contacting

Preferably, prior to the step c, the surface of the second substrate treated in step b by applying the adhesive is subject to a heat activation at a temperature of from 45 °C to 75 °C.

The heat activation can be oven activation or infrared activation.

The contacting is preferably performed before the temperature of the surface of the second substrate is lowered below a temperature at which the adhesive is bondable, further preferably before the temperature of the surface of the second substrate is not lower than 60 °C.

The first substrate is not treated with an adhesive prior to contact with the second substrate.

### Bonded article

The bonded article is preferably footwear.

### Description of figures

The invention will be illustrated and described in more detail below with reference to the accompanying figures, in which:
Figure 1 is a schematic view of sample bonding;
Figure 2 is a schematic diagram of the test for heat resistance or hydrolysis resistance of a sample.

### Examples:

All technical and scientific terms used herein have the same meaning as commonly understood by those skilled in the art to which the present invention belongs, unless otherwise defined. When the definition of a term in the present description conflicts with the meaning as commonly understood by those skilled in the art to which the present invention belongs, the definition described herein shall apply.

All numerical values expressing amount of ingredients, reaction conditions and the like which are used in the description and claims are to be understood as being modified by the term "about", unless otherwise specified. Accordingly, unless indicated to the contrary, the numerical values and parameters described herein are approximate values which can be varied according to the desired performance obtained as required.

The term "and/or" used herein refers to one or all of the elements mentioned.

The terms "containing", "including" and "comprising" used herein cover both the case that there are only the elements mentioned and the case that there are also other elements unmentioned in addition to the elements mentioned.

All percentages in the present invention refer to weight percentage, unless otherwise specified.

The analysis and measurement in the present invention are carried out at a temperature of 23±2 °C, unless otherwise specified.

The isocyanate group (NCO) content of the polyisocyanate is expressed in wt% and is determined according to DIN-EN ISO 11909:2007-05 by volume, the measured data including both free and potentially free NCO contents.

The number average molecular weight of the polyisocyanate is determined by gel permeation chromatography according to DIN 55672-1:2016-03 with tetrahydrofuran as a mobile phase and a control polystyrene standard at 23 °C.

The non-volatile content of the polyisocyanate is expressed in wt% and determined according to DIN EN ISO 3251:2008-06 at 120 °C, wherein the test time is 2 hours, the test disc has a diameter of 75 mm, and the test sample has a weight of 2.00 g ± 0.02.

The isocyanate functionality of the polyisocyanates is calculated as follows:
the isocyanate functionality of a polyisocyanate = (the number average molecular weight of the polyisocyanate ∗ the isocyanate group content of the polyisocyanate) / (42 ∗ the non-volatile content of the polyisocyanate).

### Raw materials and reagents

Polyester I: 1,4-butanediol polyadipate diol, OH value = 50.
Polyester II: a polyester diol composed of 1,6-hexanediol, neopentyl glycol, and adipic acid, OH value = 66.

Desmodur® H: 1,6-hexamethylene diisocyanate, available from Bayer MaterialScience AG, Germany.

Desmodur® I: isophorone diisocyanate, available from Bayer MaterialScience AG, Germany.

Desmodur DN: an aliphatic trimer based on hexamethylene diisocyanate (HDI) having an isocyanate group content of 21.8 wt%, a viscosity of about 1250 mPa·s (23 °C), a solid content of 100 wt%, an isocyanate functionality of 3.4, and a number average molecular weight of 650 g/mol, available from Covestro AG, Germany.

Bayhydur XP 2655: an HDI-based aliphatic trimer having an NCO group content of 20.8 wt%, a viscosity of about 3500 mPa·s (23 °C), a solid content of 100 wt%, an isocyanate functionality of 3.2, and a number average molecular weight of 700 g/mol, available from Covestro AG.

Desmodur N 3300: an HDI-based aliphatic trimer having a solid content of 100 wt%, an NCO group content of 21.7 wt%, a viscosity of about 3000 mPa·s (23 °C), an isocyanate functionality of 3.5, and a number average molecular weight of 680 g/mol, available from Covestro AG.

Bayhydur 401-60 PGDA: an aliphatic trimer based on isophorone diisocyanate (IPDI), having a solid content of 60 wt% dissolved in propylene glycol diacetate (PGDA), an NCO group content of 8.5 wt%, a viscosity of about 1100 mPa·s (23 °C), an isocyanate functionality of 2.9, and a number average molecular weight of 900 g/mol, available from Covestro AG.

Desmodur E 21: a reaction product of an aliphatic polyether polyol and diphenylmethane diisocyanate (MDI), having a solid content of 100 wt%, an NCO group content of 16.0 wt%, an isocyanate functionality of about 2.8, a viscosity of about 5400 mPa·s (23 °C), and a number average molecular weight of 720 g/mol, available from Covestro AG.

Desmodur E 29: a reaction product of an aliphatic polyether polyol and MDI, having a solid content of 100 wt%, an NCO group content of 24.0 wt%, an isocyanate functionality of about 2.2, a viscosity of about 220 mPa·s (23 °C), and a number average molecular weight of 380 g/mol, available from Covestro AG.

Desmodur E XP 2605/1: a reaction product of an aliphatic polyether polyol and TDI/MDI, having a solid content of 50 wt% dissolved in butyl acetate, an NCO group content of 4.5 wt%, an isocyanate functionality of about 3.3, a viscosity of about 350 mPa·s (23 °C), and a number average molecular weight of 1560 g/mol, available from Covestro AG.

Desmodur IL 1351 BA: an aromatic trimer based on toluene diisocyanate (TDI), having a solid content of 51 wt% dissolved in butyl acetate, an NCO group content of 8.0 wt%, an isocyanate functionality of about 4.5, a viscosity of about 1300 mPa·s (23 °C), and a number average molecular weight of 1280 g/mol, available from Covestro AG.

Desmodur IL 1451 BA: a TDI-based aromatic trimer having a solid content of 51 wt% dissolved in butyl acetate, an NCO group content of 7.4 wt%, an isocyanate functionality of about 4.8, a viscosity of about 250 mPa·s (23 °C), and a number average molecular weight of 1290 g/mol, available from Covestro AG.

Desmodur RC: a TDI-based aromatic trimer having a solid content of 35 wt% dissolved in ethyl acetate, an NCO group content of 7.0 wt%, an isocyanate functionality of about 2.6, a viscosity of about 3 mPa·s (23 °C), and a number average molecular weight of 540 g/mol, available from Covestro AG.

Desmodur L75: a TDI-based aromatic trimer having a solid content of 75 wt% dissolved in ethyl acetate, an NCO group content of 13.3 wt%, an isocyanate functionality of about 2.7, a viscosity of about 1600 mPa·s (23 °C), and a number average molecular weight of 830 g/mol, available from Covestro AG.

Desmodur HL BA: a mixture of a TDI-based aromatic trimer and an HDI-based aliphatic trimer, having a solid content of 60 wt% dissolved in butyl acetate, an NCO group content of 10.5 wt%, an isocyanate functionality of about 4.4, a viscosity of about 2200 mPa·s (23 °C), and a number average molecular weight of 1200 g/mol, available from Covestro AG.

Desmodur VP LS 2394: a mixture of a TDI-based aromatic trimer and an HDI-based aliphatic trimer, having a solid content of 60 wt% dissolved in butyl acetate, an NCO group content of 10.0 wt%, an isocyanate functionality of about 4.7, a viscosity of about 170 mPa·s (23 °C), and a number average molecular weight of 1200g/mol, available from Covestro AG.

Desmodur RN: a mixture of a TDI-based aromatic trimer and an HDI-based aliphatic trimer, having a solid content of 40 wt% dissolved in ethyl acetate, an NCO group content of 7.2 wt%, an isocyanate functionality of about 4.0, a viscosity of about 11 mPa·s (23 °C), and a number average molecular weight of 940 g/mol, available from Covestro AG.

Desmodur RFE: tris-(4-isocyanatophenyl) thiophosphate having a solid content of 27 wt% dissolved in ethyl acetate, an NCO group content of 7.2 wt%, an isocyanate functionality of about 3.0, a viscosity of about 3 mPa·s (23 °C), and a number average molecular weight of 465 g/mol, available from Covestro AG.

Dispercoll U58/1: an aqueous anionic polyurethane dispersion having a solid content of 50 ± 1%, available from German Polymers (China) Co., Ltd.

Dispercoll U54: an aqueous anionic polyurethane dispersion having a solid content of 50 ± 1%, available from German Polymers (China) Co., Ltd.

Desmodur XP 2802: a hydrophilically modified polycarbodiimide having a solid content of 40 wt%, a solid component melting point of 23.16 °C, a carbodiimide functional group content of 1 mmol/g, a number average molecular weight of 1779, a weight average molecular weight of 3258, and a carbodiimide functional group functionality of 4.5, available from Covestro AG.

Desmodur® Z 2589: isophorone diisocyanate (IPDI) trimer having a solid content of 100 wt%, a glass transition temperature of 67.75 °C, a solid component melting point of greater than 200 °C, an isocyanate functionality of no less than 3, a particle diameter d50 of about 1.5 µm, and a reaction or thickening temperature of 70 °C - 120 °C, available from Covestro AG.

Jeffamine® T403: a polyetheramine, available from Huntsman.

Tamol NN 4501: a dispersant, available from BASF.

Emulvin WA: an emulsifier having a concentration of 15 wt%, available from LANXESS.

MEK: methyl ethyl ketone, available from Yonghua Chemical Technology (Jiangsu) Co., Ltd.

MPA: propylene glycol methyl ether acetate, available from Shanghai Lingfeng Chemical Reagent Co., Ltd.

Black rubber: a sole rubber made of nitrile-butadiene rubber, available from Dong Guan Wan Tai Rubber Co., Ltd.

PVC leather: used as a shoe upper, available from Shanghai Citiking Trading Co., Ltd.

Borchigel L75N: a thickener, available from OMG.

Borchigel ALA: a thickener having a concentration of 50 wt% in deionized water, available from OMG.

### Preparation of adhesive 1

99.2 wt% of Dispercoll U58/1 and 0.8 wt% of Borchigel L75N at a concentration of 25% were mixed until a viscosity of about 5000 mPa·s was reached. After stirring for 10 min, 3 wt% to 5 wt% of Desmodur DN was added and stirred for another 10 min to give the adhesive 1.

### Preparation of adhesive 2

98.7 wt% of Dispercoll U54 and 1.3 wt% of Borchigel L75N at a concentration of 25% were mixed until a viscosity of about 5000 mPa·s was reached. After stirring for 10 min, 3 wt% to 5 wt% of Desmodur DN was added and stirred for another 10 min to give the adhesive 2.

### Preparation of adhesive 3

2.58 g of Jeffamine® T403, 0.82 g of Tamol NN 4501 and 0.59 g of Emulvin WA were added to 110.19 g of deionized water, mixed for 10-15 min under stirring at 1000 rpm. Then, 78.55 g of Desmodur® Z 2589 was slowly added to the mixture at 4000-5000 rpm, and stirred for 30 min to 1 hour to prepare a premix for use. Then, 100 g of Dispercoll U58/1 and 2 g of Desmodur XP 2802 were stirred and mixed at 1000 rpm for 10-15 min, and then 16.25 g of the above premix was added thereto. After stirring for another 10-15 min, about 1.80 g of Borchigel ALA was added to adjust the viscosity to about 5000 mPa·s, in order to give the adhesive 3.

### Preparation of adhesive 4

450 g of polyester I and 42.5 g of polyester II were dehydrated at 110 °C and 100 mbar for 1 hour, and 2.25 g of 1,4-butanediol was further added and the mixture was cooled while stirring. 37.84 g of Desmodur® H was added at 60 °C, followed by the addition of 25 g of Desmodur® I, and the mixture was stirred at 80-90 °C until an isocyanate content of 1.3% was reached. The reaction mixture was dissolved in 840 g of acetone and cooled to 50 °C. A solution of 5.6 g of sodium salt of N-(2-aminoethyl)-2-aminoethanesulfonic acid, 2.4 g of diethanolamine and 0.8 g of hydroxyethyl ethylenediamine in 656 g of water was added to the reaction mixture solution and vigorously stirred for 30 min. Afterwards, the mixture was dispersed by adding 510 g of water, followed by distillation to separate acetone to obtain an aqueous polyurethane dispersion. The aqueous polyurethane urea dispersion and 1.0 wt% of Borchigel L75N at a concentration of 25 %, based on the weight of the adhesive, were mixed until a viscosity of about 5000 mPa·s was reached. After stirring for 10 min, 3 wt% to 5 wt% of Desmodur DN was added and stirred for another 10 min to give the adhesive 4.

### PU synthetic leather (first substrate)

The components listed in Table 1 were mixed according to the corresponding amounts in Table 1, and manually stirred for 5-10 min to give a cleaning agent. The surface of the PU synthetic leather (a width of 2 cm and a length of 8 cm) to be bonded was cleaned with fibers containing the cleaning agent, tapped several times, and then dried in an oven at 60 °C for 3 min for use.

### Black rubber (second substrate)

The surface of the sanded black rubber (a width of 2 cm and a length of 8 cm) to be bonded was cleaned with fibers containing methyl ethyl ketone, and the surface of the cleaned black rubber was exposed to a fume hood until the cleaned surface was dry. Trichloroisocyanuric acid dissolved in ethyl acetate at a concentration of 2% was applied to the surface, followed by drying in an oven at a temperature of 50 °C for 3 min. Then, the adhesive shown in Table 1 was applied to the surface of the black rubber with a fine brush, with an amount of the coating being 120 g/m² (wet). Finally, the surface of the black rubber to which the adhesive was applied was dried in an air-circulating oven at 60 °C until the moisture in the adhesive film was completely removed for use.

### Performance Testing

### Bond strength test

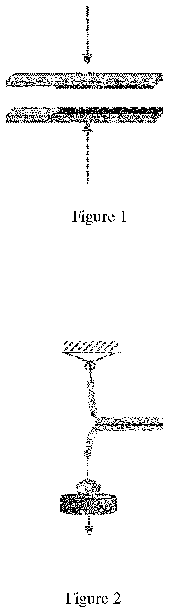

The surface of the pretreated black rubber was heated to 60 °C, and then the pretreated black rubber was quickly bonded to the treated PU synthetic leather at a pressure of 4 bar for 30 sec using a flat press (China Rongtai), as shown in Fig. 1, to give a sample of the bonded article. The bond strength of the sample was tested according to DIN EN 1392 using a ZWICK model BZ2.5/TN1S tensile machine. The unbonded parts of the black rubber and the PU synthetic leather were respectively clamped on the upper and lower clamps of the tensile machine. When the bonded surfaces of the black rubber and the PU synthetic leather were tested at a stretching rate of 100 mm/min and a stretching length of 50 mm to show a 180° peeling manner, the tensile force used at this time was recorded as the bond strength and the results are shown in Table 1. The initial bond strength (tested after 30 min of bonding) should be no less than 3 N/mm, and the final bond strength (tested after 24 hours of bonding) should be no less than 5 N/mm. A greater bond strength obtained by the test indicates that the adhesion between the substrates is greater and therefore the bond of the substrates is stronger.

### Heat resistance test

The surface of the pretreated black rubber was heated to 60 °C, and then the pretreated black rubber was quickly bonded to the treated PU synthetic leather at a pressure of 4 bar for 10 sec using a flat press (China Rongtai), as shown in Fig. 1, to give a sample of the bonded article. The sample was allowed to stand at room temperature for 24 hours, and then loaded with a 1000 g weight at 80 °C for 60 min, as shown in Fig. 2. The opening distance of the sample after maintaining at 80 °C for 60 min was recorded. If the coating could not be maintained for 60 min (that is, fully opened due to degumming), the time for the coating to be fully opened due to degumming was recorded. The results are shown in Table 1. The opening distance is the length of separation of the sample's bonded portion measured by a ruler. The longer the opening distance is, the worse is the heat resistance of the sample. Full opening due to degumming means that the sample's bonded portion is completely separated, and therefore indicates that the sample fails the heat resistance test. The opening distance should be less than 12 mm.

### Hydrolysis resistance test

The surface of the pretreated black rubber was heated to 60 °C, and then the pretreated black rubber was quickly bonded to the treated PU synthetic leather at a pressure of 4 bar for 10 sec using a flat press (China Rongtai), as shown in Fig. 1, to give a sample of the bonded article. The sample was allowed to stand at room temperature for 72 hours, and then loaded with a 1000 g weight at 70 °C and a relative humidity of 95% for 3 days, as shown in Fig. 2. The time of full opening due to degumming was recorded, and the results are shown in Table 1.

Full opening due to degumming means that the sample's bonded portion is completely separated, and therefore a shorter time of full opening due to degumming indicates that the sample has a worse hydrolysis resistance. The time of full opening due to degumming should be no less than 32 hours.

### Examples 1-69 and Comparative Examples 1-16

### Table 1 lists the components of Examples 1-69 and Comparative Examples 1-16 and the test results of their samples.

**Table 1: the components of Examples (Ex) and Comparative Examples (CE) and the test results of their bonded article samples**

| | PU synthetic Leather-cleaning agent | Black rubber-adhesive | NCO group content of the polyisocyanate (wt%) | Initial bond strength (N/mm) | Final bond strength (N/mm) | Heat resistance - opening distance/time of full opening due to degumming | Hydrolysis resistance - time of full opening due to degumming |
|---|---|---|---|---|---|---|---|
| CE 1 | MEK | Adhesive 1 | 0 | 2.46 | 5.64 | 12 mm | 32-48 h |
| CE 2 | Desmodur RC | Adhesive 1 | 7.000 | 0.92 | 1.51 | 18 mm | 56-72 h |
| CE 3 | 80 wt% of Bayhydur XP 2655, 20 wt% of MEK | Adhesive 1 | 16.96 | 0 | 0 | | |
| CE 4 | Bayhydur XP 2655 | Adhesive 1 | 21.20 | 0 | 0 | | |
| CE 5 | 80 wt% of Desmodur DN, 20 wt% of MEK | Adhesive 1 | 17.44 | 0 | 0 | | |
| CE 6 | Desmodur DN | Adhesive 1 | 21.80 | 0 | 0 | | |
| CE 7 | Butyl acetate | Adhesive 1 | 0 | 1.47 | 1.99 | 6 min | 4-8 h |
| CE 8 | MEK : Ethyl acetate = 1:1 | Adhesive 1 | 0 | 2.48 | 5.38 | 71 mm | 28-32 h |
| CE 9 | Cyclohexane | Adhesive 1 | 0 | 0.52 | 0.84 | 1 min | 1 min |
| CE 10 | Methyl ethyl ketone: Cyclohexane = 8:2 | Adhesive 1 | 0 | 1.62 | 3.09 | 23 min | 0-4 h |
| CE 11 | MEK : Propylene glycol methyl ether acetate = 8:2 | Adhesive 1 | 0 | 2.84 | 5.71 | 9 min | 32-48 h |
| CE 12 | MEK | Adhesive 2 | 0 | 2.78 | 5.37 | 3 min | 0-4 h |
| CE 13 | MEK | Adhesive 3 | 0 | 2.09 | 3.59 | 71 mm | 8-24 h |
| CE 14 | MEK | Adhesive 4 | 0 | 2.82 | 3.78 | 5 min | 4-8 h |
| CE 15 | Acetone | Adhesive 1 | 0 | 2.10 | 3.20 | 75 mm | 8-24 h |
| CE 16 | Ethyl acetate | Adhesive 1 | 0 | 1.84 | 2.98 | 18 min | 0-4 h |
| Ex 1 | 0.5 wt% of Desmodur RN, 99.5 wt% of MEK | Adhesive 1 | 0.036 | 3.49 | 7.15 | 8 mm | 32-48 h |
| Ex 2 | 1.0 wt% of Desmodur RN, 99 wt% of MEK | Adhesive 1 | 0.072 | 3.80 | 7.34 | 0 mm | 52-56 h |
| Ex 3 | 50 wt% of Desmodur RN, 50 wt% of MEK | Adhesive 1 | 3.600 | 5.38 | 7.37 | 2 mm | 56-72 h |
| Ex 4 | 0.4 wt% of Desmodur VP LS 2394, 99.6 wt% of MEK | Adhesive 1 | 0.04 | 3.22 | 5.85 | 7 mm | 32-48 h |
| Ex 5 | 0.8 wt% of Desmodur VP LS 2394, 99.2 wt% of MEK | Adhesive 1 | 0.08 | 3.40 | 6.05 | 7 mm | 32-48 h |
| Ex 6 | 1.0 wt% of Desmodur VP LS 2394, 99 wt% of MEK | Adhesive 1 | 0.10 | 3.96 | 7.33 | 10 mm | 52-56 h |
| Ex 7 | 0.2 wt% of Desmodur HL BA, 99.8 wt% of MEK | Adhesive 1 | 0.021 | 3.40 | 6.30 | 7 mm | 52-56 h |
| Ex 8 | 0.3 wt% of Desmodur HL BA, 99.7 wt% of MEK | Adhesive 1 | 0.032 | 3.66 | 6.46 | 10 mm | 52-56 h |
| Ex 9 | 0.4 wt% of Desmodur HL BA, 99.6 wt% of MEK | Adhesive 1 | 0.042 | 3.41 | 6.05 | 8 mm | 52-56 h |
| Ex 10 | 0.5 wt% of Desmodur HL BA, 99.5 wt% of MEK | Adhesive 1 | 0.053 | 3.19 | 5.81 | 8 mm | 32-48 h |
| Ex 11 | 0.8 wt% of Desmodur HL BA, 99.2 wt% of MEK | Adhesive 1 | 0.084 | 3.11 | 5.40 | 8 mm | 32-48 h |
| Ex 12 | 0.5 wt% of Desmodur RFE, 99.5 wt% of MEK | Adhesive 1 | 0.036 | 3.54 | 6.27 | 8 mm | 48-52 h |
| Ex 13 | 1.0 wt% of Desmodur RFE, 99 wt% of MEK | Adhesive 1 | 0.072 | 3.63 | 6.93 | 0 mm | 56-72 h |
| Ex 14 | 1.5 wt% of Desmodur RFE, 98.5 wt% of MEK | Adhesive 1 | 0.108 | 3.80 | 6.93 | 2 mm | 52-56 h |
| Ex 15 | 0.1 wt% of Desmodur RC, 99.9 wt% of MEK | Adhesive 1 | 0.007 | 3.78 | 7.17 | 0 mm | 56-72 h |
| Ex 16 | 0.3 wt% of Desmodur RC, 99.7 wt% of MEK | Adhesive 1 | 0.021 | 3.78 | 7.17 | 0 mm | 56-72 h |
| Ex 17 | 0.5 wt% of Desmodur RC, 99.5 wt% of MEK | Adhesive 1 | 0.035 | 4.02 | 7.11 | 0 mm | 56-72 h |
| Ex 18 | 1.0 wt% of Desmodur RC, 99 wt% of MEK | Adhesive 1 | 0.070 | 3.78 | 7.17 | 0 mm | 56-72 h |
| Ex 19 | 3.0 wt% of Desmodur RC, 97 wt% of MEK | Adhesive 1 | 0.210 | 5.07 | 7.57 | 0 mm | 56-72 h |
| Ex 20 | 5.0 wt% of Desmodur RC, 95 wt% of MEK | Adhesive 1 | 0.350 | 5.06 | 7.32 | 0 mm | 56-72 h |
| Ex 21 | 20 wt% of Desmodur RC, 80 wt% of MEK | Adhesive 1 | 1.400 | 6.06 | 7.29 | 0 mm | 52-56 h |
| Ex 22 | 50 wt% of Desmodur RC, 50 wt% of MEK | Adhesive 1 | 3.500 | 3.95 | 6.02 | 1 mm | 56-72 h |
| Ex 23 | 80 wt% of Desmodur RC, 20 wt% of MEK | Adhesive 1 | 5.600 | 5.51 | 5.80 | 1mm | 56-72 h |
| Ex 24 | 0.5 wt% of Desmodur IL 1451 BA, 99.5 wt% of MEK | Adhesive 1 | 0.037 | 4.53 | 7.06 | 0 mm | 32-48 h |
| Ex 25 | 1.0 wt% of Desmodur IL 1451 BA, 99 wt% of MEK | Adhesive 1 | 0.074 | 4.46 | 6.49 | 0 mm | 32-48 h |
| Ex 26 | 5.0 wt% of Desmodur IL 1451 BA, 95 wt% of MEK | Adhesive 1 | 0.370 | 6.24 | 7.01 | 2 mm | 52-56 h |
| Ex 27 | 50 wt% of Desmodur IL 1451 BA, 50 wt% of MEK | Adhesive 1 | 3.700 | 3.73 | 6.04 | 1 mm | 56-72 h |
| Ex 28 | 0.5 wt% of Desmodur IL 1351 BA, 99.5 wt% of MEK | Adhesive 1 | 0.04 | 5.23 | 6.84 | 1 mm | 52-56 h |
| Ex 29 | 1.0 wt% of Desmodur IL 1351 BA, 99 wt% of MEK | Adhesive 1 | 0.08 | 5.08 | 6.69 | 1 mm | 52-56 h |
| Ex 30 | 2.0 wt% of Desmodur IL 1351 BA, 98 wt% of MEK | Adhesive 1 | 0.16 | 4.72 | 8.03 | 1 mm | 32-48 h |
| Ex 31 | 10 wt% of Desmodur IL 1351 BA, 90 wt% of MEK | Adhesive 1 | 0.80 | 6.98 | 6.69 | 0 mm | 32-48 h |
| Ex 32 | 50 wt% of Desmodur IL 1351 BA, 50 wt% of MEK | Adhesive 1 | 4.00 | 3.14 | 6.47 | 2 mm | 56-72 h |
| Ex 33 | 0.3 wt% of Desmodur L 75, 99.7 wt% of MEK | Adhesive 1 | 0.039 | 3.15 | 5.88 | 8 mm | 48-52 h |
| Ex 34 | 0.6 wt% of Desmodur L 75, 99.4 wt% of MEK | Adhesive 1 | 0.078 | 3.13 | 5.57 | 5 mm | 48-52 h |
| Ex 35 | 1.0 wt% of Desmodur L 75, 99 wt% of MEK | Adhesive 1 | 0.133 | 4.01 | 7.39 | 0 mm | 52-56 h |
| Ex 36 | 5.0 wt% of Desmodur L 75, 95 wt% of MEK | Adhesive 1 | 0.665 | 4.57 | 7.17 | 1 mm | 52-56 h |
| Ex 37 | 35 wt% of Desmodur L 75, 65 wt% of MEK | Adhesive 1 | 4.655 | 4.44 | 7.18 | 1 mm | 52-56 h |
| Ex 38 | 1.0 wt% of Desmodur E XP 2605/1, 99 wt% of MEK | Adhesive 1 | 0.045 | 3.86 | 7.19 | 0 mm | 52-56 h |
| Ex 39 | 80 wt% of Desmodur E XP 2605/1, 20 wt% of MEK | Adhesive 1 | 3.600 | 3.27 | 6.88 | 0 mm | 80-96 h |
| Ex 40 | Desmodur E XP 2605/1 | Adhesive 1 | 4.500 | 3.19 | 6.73 | 0 mm | 80-96 h |
| Ex 41 | 0.25 wt% of Desmodur E 21, 99.75 wt% of MEK | Adhesive 1 | 0.04 | 3.47 | 5.41 | 1 mm | 32-48 h |
| Ex 42 | 0.50 wt% of Desmodur E 21, 99.5 wt% of MEK | Adhesive 1 | 0.08 | 3.84 | 5.83 | 3 mm | 32-48 h |
| Ex 43 | 0.17 wt% of Desmodur E 29, 99.83 wt% of MEK | Adhesive 1 | 0.04 | 3.14 | 5.46 | 2 mm | 32-48 h |
| Ex 44 | 0.33 wt% of Desmodur E 29, 99.67 wt% of MEK | Adhesive 1 | 0.08 | 3.28 | 6.78 | 2 mm | 48-52 h |
| Ex 45 | 0.5 wt% of Desmodur E 29, 99.5 wt% of MEK | Adhesive 1 | 0.12 | 3.38 | 6.98 | 8 mm | 32-48 h |
| Ex 46 | 1.0 wt% of Desmodur E 29, 99.0 wt% of MEK | Adhesive 1 | 0.24 | 3.22 | 5.53 | 7 mm | 32-48 h |
| Ex 47 | 2.0 wt% of Desmodur E 29, 98.0 wt% of MEK | Adhesive 1 | 0.48 | 3.85 | 6.58 | 7 mm | 48-52 h |
| Ex 48 | 0.1 wt% of Bayhydur XP 2655, 99.9 wt% of MEK | Adhesive 1 | 0.021 | 3.54 | 5.26 | 5 mm | 32-48 h |
| Ex 49 | 0.2 wt% of Bayhydur XP 2655, 99.8 wt% of MEK | Adhesive 1 | 0.042 | 3.58 | 5.30 | 5 mm | 32-48 h |
| Ex 50 | 0.5 wt% of Bayhydur XP 2655, 99.5 wt% of MEK | Adhesive 1 | 0.106 | 3.48 | 5.63 | 4 mm | 32-48 h |
| Ex 51 | 1.0 wt% of Bayhydur XP 2655, 99.0 wt% of MEK | Adhesive 1 | 0.212 | 3.24 | 6.86 | 0 mm | 32-48 h |
| Ex 52 | 0.2 wt% of Desmodur N3300, 99.8 wt% of MEK | Adhesive 1 | 0.044 | 3.23 | 6.25 | 5 mm | 48-52 h |
| Ex 53 | 0.3 wt% of Desmodur N3300, 99.7 wt% of MEK | Adhesive 1 | 0.065 | 3.40 | 6.28 | 7 mm | 52-56 h |
| Ex 54 | 0.2 wt% of Desmodur DN, 99.8 wt% of MEK | Adhesive 1 | 0.044 | 3.71 | 6.92 | 5 mm | 32-48 h |
| Ex 55 | 0.5 wt% of Desmodur DN, 99.5 wt% of MEK | Adhesive 1 | 0.110 | 3.78 | 6.43 | 5 mm | 32-48 h |
| Ex 56 | 1.0 wt% of Desmodur DN, 99.0 wt% of MEK | Adhesive 1 | 0.218 | 3.21 | 7.16 | 0 mm | 32-48 h |
| Ex 57 | 0.15 wt% of Bayhydur 401-60 PGDA, 99.85 wt% of MEK | Adhesive 1 | 0.013 | 3.69 | 6.10 | 8 mm | 52-56 h |
| Ex 58 | 0.3 wt% of Bayhydur 401-60 PGDA, 99.7 wt% of MEK | Adhesive 1 | 0.026 | 3.75 | 6.41 | 8 mm | 52-56 h |
| Ex 59 | 1.0 wt% of Bayhydur 401-60 PGDA, 99.0 wt% of MEK | Adhesive 1 | 0.085 | 4.36 | 6.12 | 7 mm | 32-48 h |
| Ex 60 | 1.0 wt% of Desmodur E XP 2605/1, 99.0 wt% of acetone | Adhesive 1 | 0.045 | 4.29 | 5.92 | 1 mm | 32-48 h |
| Ex 61 | 1.0 wt% of Desmodur E XP 2605/1, 99.0 wt% of ethyl acetate | Adhesive 1 | 0.045 | 3.17 | 5.02 | 0 mm | 32-48 h |
| Ex 62 | 1.0 wt% of Desmodur E XP 2605/1, 99.0 wt% of butyl acetate | Adhesive 1 | 0.045 | 3.56 | 5.39 | 0 mm | 32-48 h |
| Ex 63 | 3.0 wt% of Desmodur E XP 2605/1, 97.0 wt% of butyl acetate | Adhesive 1 | 0.135 | 4.32 | 6.16 | 1 mm | 52-56 h |
| Ex 64 | 1.0 wt% of Desmodur E XP 2605/1, 99.0 wt% of MEK and ethyl acetate (1:1) | Adhesive 1 | 0.045 | 4.11 | 6.05 | 0 mm | 32-48 h |
| Ex 65 | 1.0 wt% of Desmodur E XP 2605/1, 99.0 wt% of MEK and cyclohexane (8:2) | Adhesive 1 | 0.045 | 4.60 | 7.75 | 0 mm | 52-56 h |
| Ex 66 | 1.0 wt% of Desmodur E XP 2605/1, 99.0 wt% of MEK and MPA (8:2) | Adhesive 1 | 0.045 | 3.97 | 7.77 | 1 mm | 52-56 h |
| Ex 67 | 3.0 wt% of Desmodur E XP 2605/1, 97.0 wt% of MEK | Adhesive 2 | 0.135 | 3.42 | 5.52 | 10mm | 32-48 h |
| Ex 68 | 1.0 wt% of Desmodur E XP 2605/1, 99.0 wt% of MEK | Adhesive 3 | 0.045 | 3.84 | 5.40 | 2 mm | 32-48 h |
| Ex 69 | 1.0 wt% of Desmodur E XP 2605/1, 99.0 wt% of MEK | Adhesive 4 | 0.045 | 5.00 | 6.55 | 6 mm | 52-56 h |

All of the bonded articles of Examples 1-69 have an initial bond strength of more than 3 N/mm, a final bond strength of more than 5 N/mm, an opening distance of less than 12 mm, and a time of full opening due to degumming of no less than 32 hours. As a consequence, the bonded articles of Examples 1-69 obtained by conducting single-side gluing have good bond strength, heat resistance and hydrolysis resistance, that is, good mechanical properties.

As can be seen from Comparative Examples 1 and 7-16, when the polyisocyanates in the cleaning agents have an isocyanate group content of less than 0.005 wt% based on the weight of the respective cleaning agent, the corresponding bonded articles obtained by conducting single-side gluing cannot fulfill the mechanical properties such as bond strength, heat resistance and hydrolysis resistance at the same time, and therefore not meet the requirements of the industry.

As can be seen from Comparative Examples 2-6, when the polyisocyanates have an isocyanate group content of more than 6 wt% based on the weight of the respective cleaning agent, the corresponding bonded articles obtained by conducting single-side gluing cannot fulfill the mechanical properties such as bond strength, heat resistance and hydrolysis resistance at the same time, and therefore not meet the requirements of the industry.

It is apparent to those skilled in the art that the present invention is not limited to the specific details described above, and may be embodied in other specific forms without departing from the spirit or essential characteristics of the present invention. The Examples are to be considered in all respects as illustrative but not restrictive, so that the scope of the present invention is defined by the claims rather than the foregoing description. Thus, any change, as long as it belongs to the meaning and range of equivalents of the claims, should be considered as part of this invention.

## Claims

1. A method for preparing a bonded article by conducting single-sided gluing, comprising the steps of:
a. applying a cleaning agent to at least one surface of a first substrate, and drying the surface of the first substrate to which the cleaning agent is applied;
b. applying an adhesive to at least one surface of a second substrate, and drying the surface of the second substrate to which the adhesive is applied; and
c. contacting the surface of the first substrate treated in step a with the surface of the second substrate treated in step b to obtain the bonded article;
wherein the cleaning agent comprises a polar organic solvent and a polyisocyanate; the polar organic solvent has a boiling point of no more than 135 °C and is not isocyanate-reactive; the polyisocyanate has a general formula R(NCO)ₙ, wherein R is one or more of the following: an aliphatic hydrocarbon group having 2 to 18 carbon atoms, an aromatic hydrocarbon group having 6 to 15 carbon atoms, and an araliphatic hydrocarbon group having 8 to 15 carbon atoms, and n is not less than 2; wherein the polyisocyanate has an isocyanate group weight of from 0.005 wt% to 6 wt%, based on the weight of the cleaning agent.

2. The method according to claim 1, **characterized in that** the polyisocyanate has an isocyanate group weight of from 0.007 wt% to 5.6 wt%, preferably from 0.01 wt% to 4.5 wt%, further preferably from 0.01 wt% to 0.5 wt%, more preferably from 0.02 wt% to 0.2 wt%, still more preferably from 0.02 wt% to 0.085 wt%, and most preferably from 0.04 wt% to 0.085 wt%, based on the weight of the cleaning agent.

3. The method according to claim 1 or 2, **characterized in that** the polar organic solvent is one or more of acetone, methyl ethyl ketone, ethyl acetate or butyl acetate, a mixture of butyl acetate and cyclohexane and methyl ethyl ketone, a mixture of methyl ethyl ketone and propylene glycol diacetate, or a mixture of butyl acetate and methyl ethyl ketone and propylene glycol methyl ether acetate; further preferably a mixture of methyl ethyl ketone and ethyl acetate, a mixture of methyl ethyl ketone and butyl acetate, a mixture of methyl ethyl ketone and propylene glycol diacetate, a mixture of acetone and butyl acetate, a mixture of ethyl acetate and butyl acetate, a mixture of ethyl acetate and butyl acetate and methyl ethyl ketone, a mixture of butyl acetate and cyclohexane and methyl ethyl ketone, a mixture of butyl acetate and methyl ethyl ketone and propylene glycol methyl ether acetate, methyl ethyl ketone or butyl acetate; and most preferably methyl ethyl ketone.

4. The method according to claim 1 or 2, **characterized in that** n in the general formula of the polyisocyanate is from 2.5 to 5.5, most preferably from 2.5 to 4.

5. The method according to claim 1 or 2, **characterized in that** the polyisocyanate is one or more of the following: toluene diisocyanate trimer, the prepolymer of toluene diisocyanate and diphenylmethane diisocyanate, hexamethylene diisocyanate trimer, isophorone diisocyanate trimer, the prepolymer of diphenylmethane diisocyanate, and tris-(4-isocyanatophenyl) thiophosphate, most preferably one or more of the following: the prepolymer of toluene diisocyanate and diphenylmethane diisocyanate, and toluene diisocyanate trimer.

6. The method according to claim 1 or 2, **characterized in that** the first substrate is one or more of the following: a polyurethane-based material and a polyvinyl chloride-based material, most preferably a polyurethane-based synthetic leather.

7. The method according to claim 1 or 2, **characterized in that** the cleaning agent comprises methyl ethyl ketone and a polyisocyanate having an isocyanate functionality of from 2.5 to 4, wherein the polyisocyanate is one or more of the following: the prepolymer of toluene diisocyanate and diphenylmethane diisocyanate, and toluene diisocyanate trimer, wherein the polyisocyanate has an isocyanate group weight of from 0.04 wt% to 0.085 wt%, based on the weight of the cleaning agent.

8. The method according to claim 1 or 2, **characterized in that** prior to applying the adhesive, the second substrate is subject to a pretreatment comprising the steps of:
i. sanding or cleaning the second substrate; and
ii. applying a primer to the second substrate treated in step i.

9. The method according to claim 1 or 2, **characterized in that** prior to the step c, the surface of the second substrate treated in step b by applying the adhesive is subject to a heat activation at a temperature of from 45 °C to 75 °C.

10. A bonded article prepared by the method according to any one of claims 1-9.

11. Use of the bonded article according to claim 10 in the production of footwear.
